# EUROPEAN PATENT SPECIFICATION

(11) **EP 0 334 459 B1**
(45) Date of publication and mention of the grant of the patent: **07.09.1994**
(21) Application number: 89200740.2
(22) Date of filing: 22.03.1989
(51) Int. Cl.: G03B 21/11, G09B 29/10

(54) **Apparatus for displaying map information**
Vorrichtung zur Projektion von Karteninformation
Dispositif de projection d'information de cartes

(30) Priority: 25.03.1988 US 173643
(43) Date of publication of application: 27.09.1989
(73) Proprietor: United Overseas Technology Limited, Hamilton HM 12 (BM)
(72) Inventor: Jerie, Hans Georg, NL-7523 HP Enschede (NL); Heister, Aloisius Henricus Maria, NL-7514 BN Enschede (NL)
(74) Representative: Schumann, Bernard Herman Johan

(56) References cited:
- EP-A- 0 178 742
- GB-A- 2 070 273
- US-A- 3 563 645
- US-A- 4 312 577

## Description

The invention relates to a map display system which comprises a microfiche representation of spatially separate first and second map images of the same terrain and having different scales so as to be examined individually at fixed magnification to reveal details of corresponding portions of the map images permitted by the individual scales of the two map images and the fixed magnification.

Such a system is known from EP-A-0 178 742. This known projecting device comprises a memory for storing relative position and scale factor information, memory reading means, hand-operated means for adjusting part of a map projected, switching means for switching between parts of a map or to another map, said maps having different scales, and a displacement means. When moving from one map to another by operating said switching means any position on said one map is uniquely related to the corresponding position on any one of the other maps. The projection system comprises one single lens unit having a fixed magnification.

US-A-4 312 577 relates to a map display system for an automobile, in which a map is projected on a screen by optical magnification of a portion of only one map disposed on a movable slide.

In US-A-4 097 134, and in other prior art cited in connection therewith, various methods and apparatus for displaying map information are proposed. This prior art is relatively complex and expensive. In general, the prior art may use a fixed magnification with a continuous map image of one scale, at times in conjunction with a parallel image strip illustrating places of interest route. In other instances, the displaying optical system may be of variable magnification to allow zooming in on a particular area of interest on the route being displayed. One of the difficulties attendant upon variable magnification, aside from the complexity and expense of the optical system, is the fact that any lettering of indicia used for identification purposes will be usable only at low magnification and at high magnification will tend to obscure or obliterate the enlarged image, or at lower magnifications, will be too small to be intelligible.

Accordingly, it is an object of the invention to provide an improved map projection system which addresses the problems extant in the prior art.

The invention concerns a map display system of the type indicated above, characterized by
a substantially rigid support for the microfiche having a rack along one side edge thereof, and
a receptacle defining a slot for receiving the support, a motor carried by the receptacle and a driving gear rotated by the motor and engagable with the rack to draw the support into the receptacle along one path and to translate the support back and forth along the one path, a housing having guide slots extending along a second path orthogonal to the one path, the receptacle having a second rack extending along the second path and guides received in the guide slots, the housing including a second motor and a second driving gear rotated by the second motor and engagable with the second rack to draw the receptacle into the housing and to translate the receptacle back and forth along the second path.

In an embodiment of the invention, a system in which the map image of smaller scale is of small size compared with the size of the other map image of larger scale, comprises means for displaying a portion of a selected one of the map images at a fixed magnification, and means for switching the fixed magnification display from the portion of the selected one of the map images to a corresponding portion of the other map image, in which system the means for switching comprises a microprocessor having memory means for storing the coordinate positions of a reference point of the displayed portion of the selected one of the map images and programmed to compute the corresponding reference point coordinates of the corresponding portion of the other map image.

As used herein, "corresponding portion" is meant to refer to corresponding portions of two (or more) map images of different scales in the sense that the central point of each such portion will be the same. That is, it will be appreciated that although the display area does not change in size, when switching from a display of one map image scale to another, the relative area of map image being displayed will change. However, the system may be such that the center point of the display of any scale map image will always be centered when switching takes place so that if the viewer switches while the center point of the displayed map image is on or about on the region in which he is most interested, the display when switched will still be centered on the same centerpoint and the new display will encompass the desired region irrespective of the scale to which switched.

In accord with an object of the invention, it is of importance that the magnification remains fixed in order to simplify the optical system utilized and to avoid the use of movable parts or components which could introduce distracting and unacceptable movement of the displayed information. This is particularly important if the system is to be employed in, for example automobiles or the like.

In a preferred embodiment, the motor carried by the receptable and the second motor are responsive to the microprocessor for moving the support orthogonally with respect to the means for displaying to effect switching between fixed magnification displays.

It will be further appreciated that the system acoording to this invention requires that the composite of the map images, whether there be two or more separate images, be accurately oriented between or among the separate images of different scales. This accuracy is necessary in order to simplify the arithmetic operations involved in switching from one map image to another. For example, a particular point on a map image having one scale is easily defined in terms of its orthogonal coordinates but also requires a knowledge of the various map image scales involved if a switch to the same particular point on a map image of different scale is to be effected. Further, simplification is maintained if the relative displacements between the optical system and the map image composite are effected in consonance with the orthogonal coordinates. Still further, simplification is maintained if the shapes of each separate map image of the composite are rectangular with the edges or borders of each map image extending in the coordinate directions. Another consideration of a practical nature concerns elimination of dual display or partially blank display which could occur under certain circumstances. For example, if two map images are closely adjacent or in touching relation, parts of both map images could be displayed at the same time, or if the edge or border of a map image is overlapped in the display and no other map image is adjacent, the display will be partially blank where the display extends beyond the border. Elimination of these phenomena may be effected by limiting relative movement between the optical system and the map image composite so that the center point of a square display may not approach the border by a distance less the one half the width of the field of view of the display.

Another object of the invention is to provide a microfiche representation of spatially separate first and second map images of the same terrain and having different scales so as to be examined individually at fixed magnification to reveal details of corresponding portions of the map images permitted by the individual scales of the two map images and the fixed magnification.

These and other objects of the invention will become more apparent as this description proceeds.

### BRIEF DESCRIPTION OF DRAWING FIGURES

Figure 1 is a perspective view of one embodiment of the prior art;
Figure 2 is a view similar to Figure 1 but illustrating another embodiment;
Figure 3 is a perspective view of a further embodiment of the prior art system
Figure 4 is a plan view of a map image composite according to this invention plus an illustrative diagram;
Figure 5 is a sectional view of an assembly according to the principles of Figure 1;.
Figure 6 is an exploded perspective view of a preferred embodiment of the invention;
Figure 7 is a plan view of a modified form of map image composite and support therefor;
Figure 8 is a perspective view of a portion of the embodiment of Figure 6 but in assembled form;
Figure 9 is a vertical section taken through a completed assembly in accord with the embodiment of Figure 6;
Figure 10 is a schematic diagram of a control and processing arrangement of the invention; and
Figure 11 is a view similar to Figure 10 but showing a modified arrangement.

### DESCRIPTION OF THE PRIOR ART

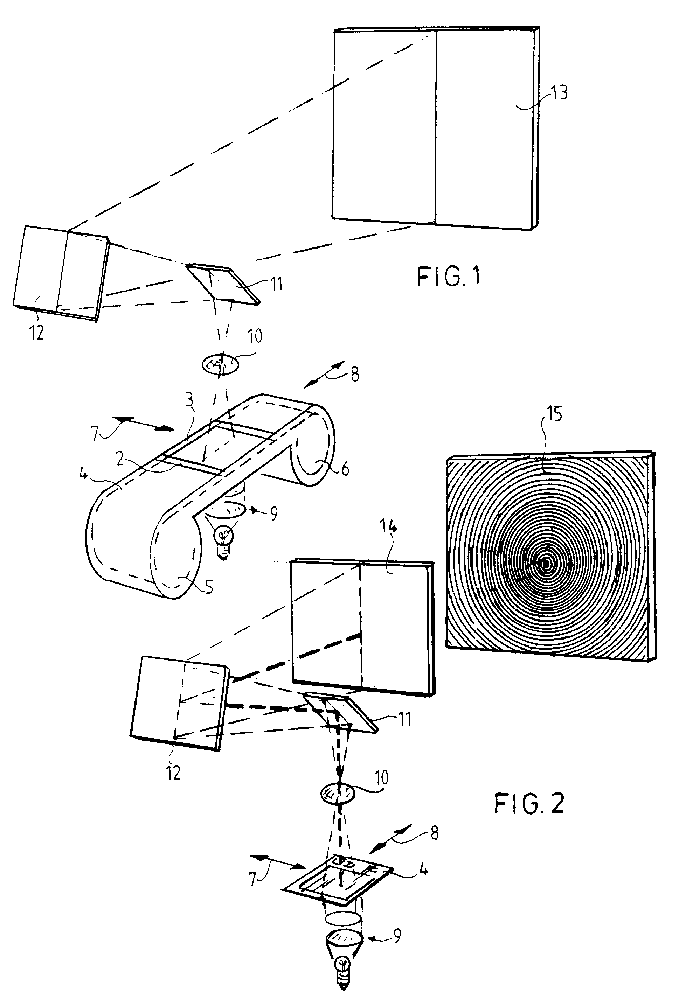

Fig. 1 shows a cassette comprising two transparant platens 2, 3, between which a slide-positive film 4 carrying map information is movable between two supply reels 5 and 6. The cassette is movable in two relatively perpendicular or orthogonal directions in accordance with arrows 7 and 8, respectively. At one side of the film 4 an illumination device 9 is positioned, while at the other side of the film 4 a lens-system 10 (schematically indicated as a single lens) is positioned behind which two mirrors 11, 12, respectively, are present for folding the light path and projecting the desired map information on a projection screen 13 for display. The projection screen 13 may be a ground glass platen, so that a user of the apparatus can see the projected image of the other side.

Fig. 2 shows a variant. Corresponding elements have been referred to with the same reference numerals as in Fig. 1. In this embodiment the image is projected on a relatively small projection screen 14 and the user can observe that projected image through a Fresnel-lens 15 of the positive type, arranged at a suitable distance from the projection screen 14. Thus a user can see a virtual image at a large distance through the lens, due to which his eyes do not need to accommodate.

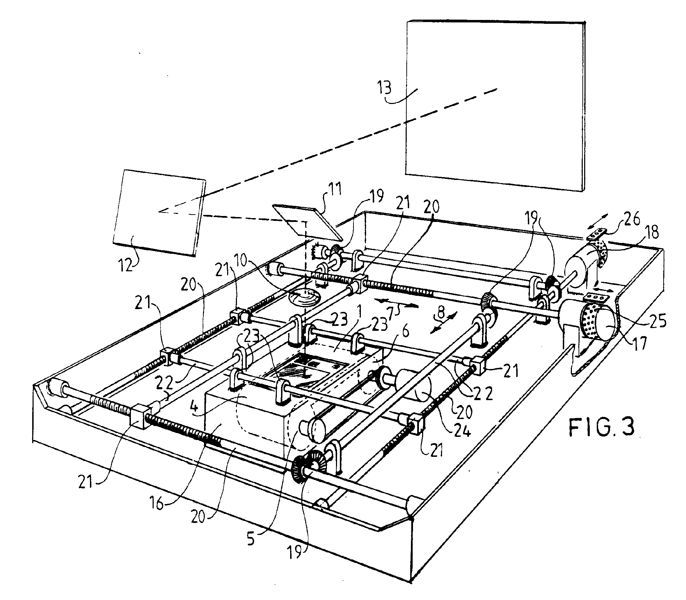

Fig. 3 illustrates a device for effecting relative movement between the optical system and the map image composite, elements corresponding to those already described in connection with Fig. 1 being referred to with the same reference numerals.

In the embodiment according to Fig. 3, the cassette 1 is carried by a cassette cartridge 16, movable by means of two motors 17 and 18, respectively, according to arrows 7 and 8. The motor 17 directly drives the lead screw 20 whereas the motor 18 directly drives the lead screw 20′. The lead screw 20˝ is parallel to the lead screw 20 and is driven in unison with it through the bevel gear drives 19 associated with the coupling shaft 22. These two lead screws travel the nuts of blocks 21 on the shafts 22 back and forth in response to opposite directions of rotation of the lead screws. Similarly, back and forth motions of the shafts 22′, 22′, are effected by rotations of the lead screws 20′, 20′, acting on the nuts 21 on the coupling shafts 22′, 22′. The coupling shafts 22, 22 and 22′, 22′ act as guide bars along which the the eyes slide so that the cassette cartridge 16 may be displaced in the orthogonal directions 7 and 8.

A motor 24 controls the transport of the film 4 when scrolling of the film is to be effected to move from exposure of one map image composite for display to another map image composite containing other map image information. Also, this motor 24 may be used for effecting the related displacements of the film 4 while displaying map information.

The motors 17 and 18 are coupled with manually operating means, not shown, for by means of position transducers or sensors 25, 26 included in servo loops, adjusting the desired part of a map and projection thereof on projection screen 13.

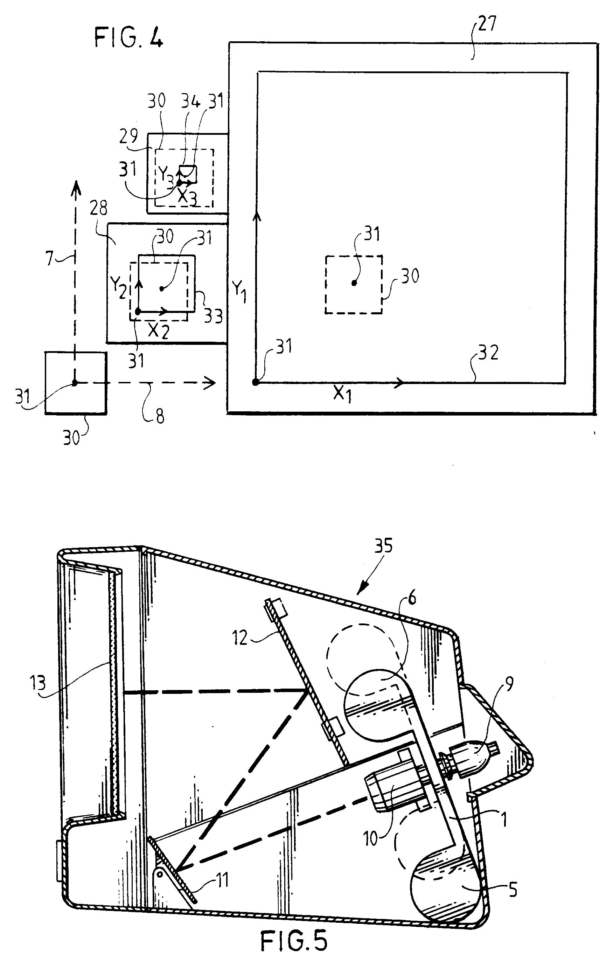

Fig. 4 shows three maps 27, 28, 29, respectively, of the same region, on the scales 1:200 000 (large scale), 1:1 000 000 (medium scale) and 1: 3 000 000 (small scale), respectively. These maps are present on a film in slide-positive or microfiche form. A framework 30 indicates the scanning area of the lenses-system 10 according to the previous figures. This framework 20 has a square shape and the middle is indicated by reference numeral 31. The directions 7 and 8 are indicated relative of this middle point as a center of the coordinate system. In map 27 the framework 30 is shown again with interrupted lines in order to indicate the part that eventually is visualized, i.e. projected. Close to the left lower corner of map 27 the center 31 is shown again. Relative to that point again a square framework 32 is drawn. This framework 32 is the ultimate limit of the center 31, before which not yet a black rim becomes visible at the projection. Mutatis mutandis this is also valid for maps 28 and 29. The related limits, within which the middle point 31 may be displaced are indicated here with the frameworks 33, 34, respectively. It will be obvious that the distance between the sides of the ultimate edges of maps 27, 28, 29 and the middle point 31 of framework 20 has to be identical for all three maps.

Fig.5 shows a section of an apparatus 35, which is a further elaboration of the example schematically indicated in Fig. 1. In Fig. 5, again, the same reference numerals as in Fig. 1 are used for corresponding elements.

With reference to Fig. 5 it will be clear that the apparatus 35 may have a compact construction, in such a way that it is well suited for application in an automobile.

### DETAILED DESCRIPTION OF THE INVENTION

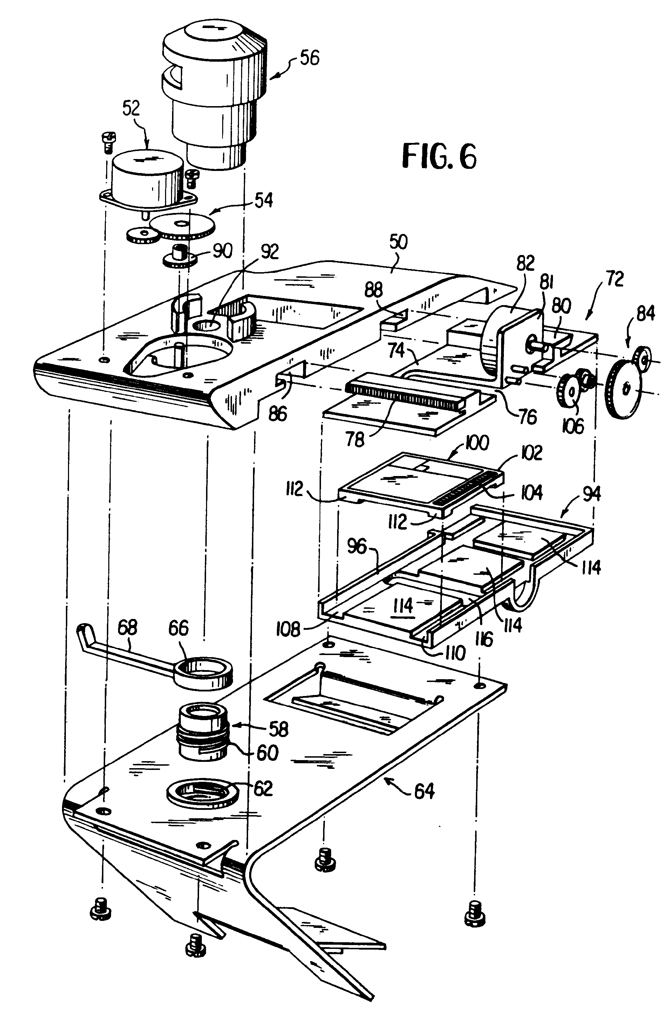

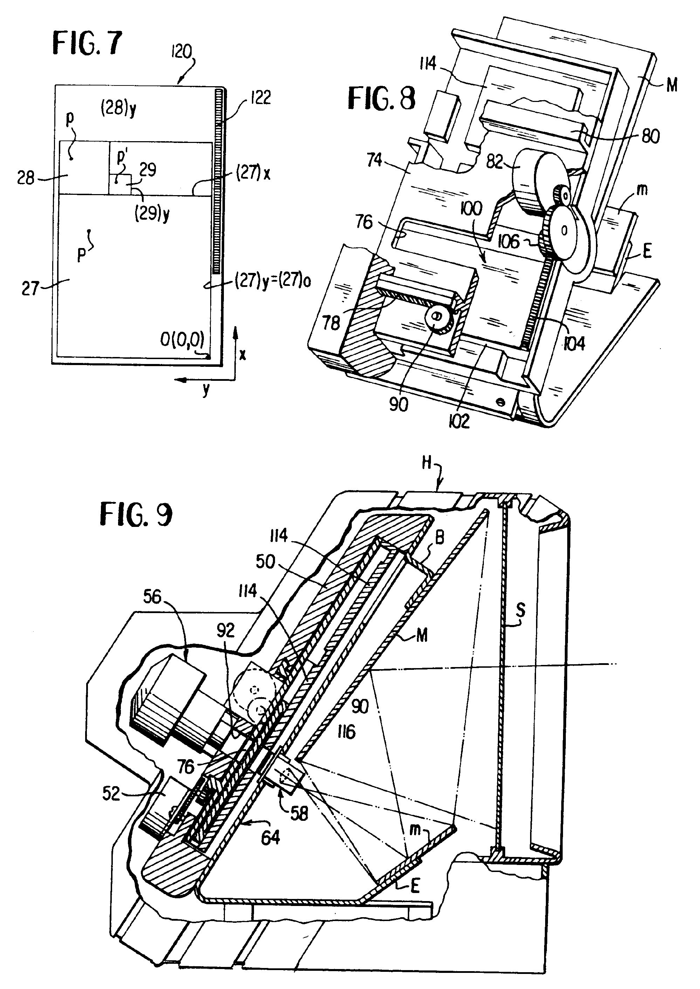

Fig. 6 illustrates a preferred embodiment of the invention in exploded perspective form of the important components. Thus, a casing cover 50 is shown upon which the motor 52 and its gear drive 54 as well as the light source housing are mounted. The fixed magnification lens system is illustrated at 58 having its adjustment thread 60 adapted to be received in the internal thread 62 of the frame member 64 and shown associated with the collar 66 and lever 68 which may be manually swung to effect the desired focus of the lens system 58. As will be clear from Fig. 9, the entire assembly of Fig. 6 may be enclosed within the housing H and the plate portion 70 is affixed to the underside of the cover 50 to define a pocket within which the unit 72 (Fig. 6) is slidably received.

The unit 72, as best seen in Fig. 6, includes the top plate 74 having the transverse slot 76, the toothed rack 78 of generally L-shape and the L-shape guide 80. The top plate also includes the mounting gear 81 for the motor 82 and the drive gear assembly 84 is associated with the motor 82. The L-shaped rack assembly 78 and the L-shaped guide 80 are slidably received in the respective transverse slots 86 and 88 in the underside of the cover 50 so that the top plate 74 and components mounted and carried thereon may freely slide back and forth. It will be understood that when so guided by the cover, the spur gear 90 of the drive gear assembly 54 engages the rack 78 so that rotation of the motor 52 travels the top plate assembly 74 back and forth, dependent upon the direction of motor rotation, in the direction of the related orthogonal motion. The slot 76 in the top plate registers with the opening 92 through which the light source housing 56 projects the light source illumination.

The bottom plate 94 has a raised peripheral edge 96 engaging against the underside of the top plate 74 to which it is secured and the other orthogonal direction and 98 of the bottom plate 94 defines a slot or opening therewith which slidably receives the map image composite 100 including its support 102. The support 102 includes the rack 104 along one edge, as shown, which engages with the spur gear 106 of the gear drive 84 which effects back and forth sliding of the support 102. The unit which is the map image composite and its support is freely slidable within the space between the top plate and the bottom plate, the latter having troughs 108 and 110 slidably receiving the corner feet 112 of the unit and reaised table portions 114 providing solid support for the underside of the support 102.

To complete the assembly, it is to be noted that the mirror M is mounted on the bracket B and the mirror m on the ear E as in Fig. 9 to fold the optical axis as shown and project the magnified image of the appropriate portion of the map image composite through the screen S for display.

The unit illustrated in Fig. 7 includes the support 120 with its rack 122 and mounting the map image composite comprising the three map images 27, 28 and 29 as in Fig. 4 having the different scales which are to be displayed with fixed magnification. From Fig. 7, assuming the direction of motion corresponding to the direction 7 of X direction is the direction back and forth along which the rack 122 extends, and that the direction along which the rack 78 of the support 74 extends is therefore the Y direction 8, it will be appreciated that a common coordinate system for the map images can be defined in terms of the angular rotations of the two motors 52 and 82. However, since the scales of the map images are different, to find a point on a map image which corresponds with the same point on the other map images, information concerning the coordinate positions of cerain of the borders of the map images comes into play for the particular spatial orientation of the map images as illustrated. Thus, with the images oriented as shown, information must be known defining the x values of the bottom and top edge borders of the map image 27 in the common coordinate system, which would be (27)ₓ₁ and (27)ₓ₂ where (27)ₓ₁ is less than (27)ₓ₂, that defining the y values of the right-hand edge border of the map image 27 in the coommon coordinate system, which would be (27)_{yl}. Using this notation, the intersection of the right-hand edge border and the bottom edge border of the map image 27, would define the x, y values 0,0 of the origin 0 of the common coordinate system, although it will be appreciated that the x and y values 0,0 of such origin are entirely arbitrary and that the 0,0 values were chosen for the purposes of this discussion to make the calculations which follow more simple and straightforward. Additionally, information defining y values the right-hand edge borders of the other map images 28 and 29 must be known. Thus, the y values of such borders are (28)_{y1} and (29)_{y1}. Lastly, the values of the respective scales A, B and C of the map images 27, 28 and 29 must be known. These values are, in accord with those previously given, in the proportions of 1, 5 and 15, so that the ratio of the scale of the map image 27 to that of the map image 28 would be 1/5, the ratio of the scale of the map image 27 to the scale of the map image 29 would be 1/15, the ratio of the scale of the map image 28 to the scale of the map image 29 would be 1/3. Therefore, in the common coordinate system, to switch from the arbitrary point p_{x,y} on the map image 27 in Figure 7 to the corresponding point P_{x,y} on the map image 28, would require the following calculation:

X distance motor drive from Pₓ to pₓ = (27)ₓ₂ - Pₓ + Pₓ(R1), where R1 is the ratio of the scale A of the map image 27 to the scale B of the map image 28. Using the scales disclosed above, R1 would equal 1/5.

Y distance motor drive from P_{y} to p_{y} = (28)_{y1} + P_{y}(R1).

Similarly, to switch from the point P_{x,y} on the map image 27 to the corresponding point p′_{x,y} on the map image 29:

X distance motor drive from Pₓ to p′ₓ = (27)ₓ₂ - Pₓ + Pₓ(R2), where R2 is the ratio in scales between the map images 27 and 29, or R2 = 1/15 from the above disclosure.

Y distance motor drive = (29)_{y1} + P_{y}(R2).

Lastly, to switch from the point p on the map image 28 to the corresponding point p′ on the map image 29:

X distance motor drive from p_{x,y} to p′_{x,y} = (27)ₓ₂ + pₓ(R3), where R3 = 1/3 from the above disclosure.

Y distance motor drive from p_{x,y} to p′_{x,y} = (29)_{y1} + p_{y}(R3).

From the above, it should be understood how the calculations are to be made in switching back and forth between corresponding points on any two of the map images.

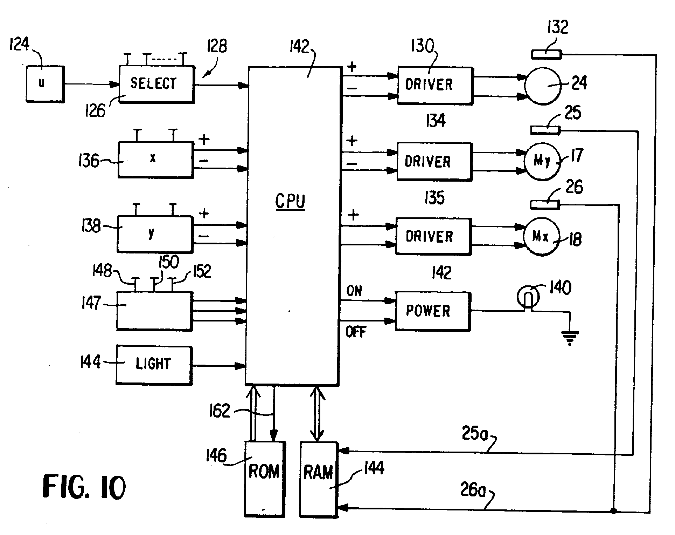

With reference to Figure 10, a control system in accord with the above calculations and relating to the embodiment of Fig. 3 is illustrated. The microprocessor of this control system includes the CPU 142 which is programmed to perform different routines in response to certain inputs. In general, the following manual inputs effect the stated fuctions:

### MANUAL INPUTS/FUNCTIONS

1. Insert cassette 1 - prepares the system to generate an input signal to scroll the microfiche film to a particular selected map image composite.
2. Depress map image composite selection button - to complete signal input to the motor 24 to scroll to the selected map image composite.
3. Depress the light switch button - turns the optical system light source "on".
4. Enter x and/or y drive button controls - energizes the motors 17 and/or 18 to position display as desired.
5. Depress map image switch selection button - initiates calculations to switch the display from a particular center point of one map image to the corresponding display center point of the selected map image, with optical light source "off" function during calculations and movement to the new display position whereupon the light source is returned to "on".

In Fig. 10, the normally open microswitch 124 responds to and is closed by the introduction of the cassette 1 carrying the map image composite microfiche film into the x,y tranport system. The map image composite selection switch 126 includes a plurality of buttons 128 corresponding to the number N of map image composites which are contained on the microfiche film and depression of a selected button 128 provides the input to the CPU to generate the + or - outputs to the driver 130 for the motor 24 to rotate it in the proper directions to scroll the microfiche film so that the selected microfiche map image composite N is exposed for display. The sensor 132 stores the scrolled x coordinate position (COMP)N₀ₓ of the film in the RAM 144 and the CPU refers to this information which is present in the ROM 146 for each composite N on the film and terminates the drive to the scroll motor 24 when the selected film position (COMP)N₀ₓ is reached. This selected position corresponds to the value 0ₓ for the selected composite N and the CPU also energizes the driver 134 to drive the motor 17 to attain the value y=0 so that the selected composite position is at the origin 0 (see Fig. 7) for that composite. Thus, in this embodiment, the initial reference position is always the origin 0 for the particular map image composite under consideration.

The operator may move the display to any selected position on the map image 27 by depressing the + or - button on the x control switch 136 and/or the + or - button on the y control switch 138. The CPU responds, in each case, by energizing the driver 134 to rotate the motor 18 in the desired direction. A shift to another map image 28 or 29 may be effected if desired by depressing the proper one of the shift buttons 148, 150 or 152. In response, the map image selector 147 initiates the calculations in the CPU to effect the desired change to switch the display from a particular center point of one map image to the corresponding display center point of the selected map image, with optical light source 140 power source 142 "off" during calculations and movement to the new display position whereupon the light source is returned to power "on". The operator may also power the light source of an on by manipulation of the switch 144.

The ROM 146 contains the necessary information to effect the calculations subsequently required, as has been described for the spatial orientation of the map images in accord with Fig. 7 so that when one of the map selection manual switches 148, 150 or 152 is actuated to send a signal to the CPU, the calculations required to switch between the points P, p or p′ of the map images of the composite in question is performed. The calculations are effected in accord with normal programming functions effected by the CPU, involving reading the actual current x and y values from the RAM, addressing the ROM over the line 162 to read the relevant information from the ROM to perform the required calculations, etc. When the calculations are taking place and for a time sufficient for the motors to respond to the commands fed over the lines to the drivers 134 and 135, the CPU energizes the light source 149 of the optical system for a time sufficient to allow the motors 17 and 18 to switch the display to the new, selected map image position.

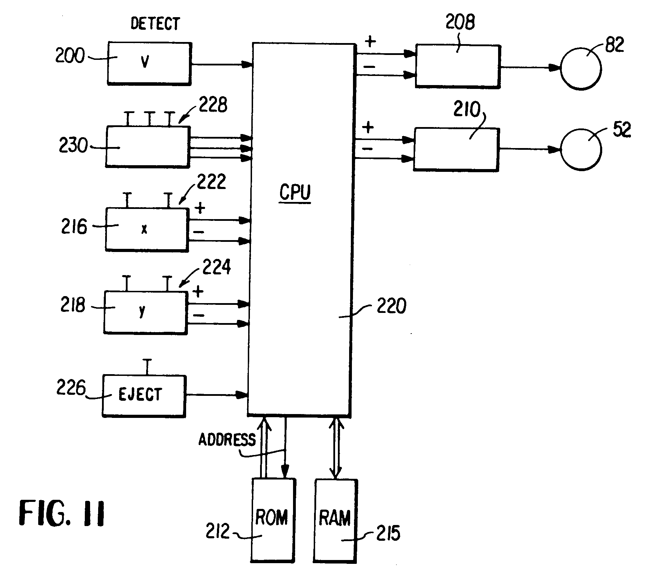

Figure 11 illustrates the preferred control system for the preferred apparatus as illustrated in Figs. 6-9 wherein the motors 52 an 82 are step motors. In this control system, when the microfiche is inserted partially into the device, its presence is detected by the microswitch 200 which initiates reference positioning of the microfiche composite by an input signal to the CPU 220. The respective drivers 208 and 210 are pulsed by the CPU in the proper direction of drive of the pulse motors 52 and 82 until the reference position of the microfiche is reached. The pulse drive to the motor 82 moves the microfiche and its support 100 which has been positioned in the slot between the top and bottom members 74, 94 toward the x reference position while the motor 52 "sucks" this carrier into the grooves 86 and 88 into which it is partially inserted in much the same manner a tape cassette of a VCR is drawn in. The motor 52 commences relative y movement between the optical system and the microfiche until the reference point P_{y} value is attained while the motor 82 moves the support 110 with microfiche until the reference point Pₓ value is attained. The correct reference point values are read from the ROM 212. It will be understood that the suport assembly 100 is initially inserted until the rack 104 engages the gear 106 and that the carrier assembly is inserted until the rack 78 engages the gear 90. As before, the ROM 21 contains the information to perform all necessary calculations.

Additional manual inputs are the + and - pulse controls 216 and 218 for the motor drivers 208 and 210, each having its respective + and - buttons 222 and 224. The actual coordinate positions may be written into the RAM. The "jump" or switch from one map image to another is effected by depressing the appropriate map selection button 228 on the switch input control 230 and in response to an input therefrom, the CPU commences the requisite calculations to perform the necessary positive or negative pulse commands to the two step motor 52 and 82. The current actual x and y positions may be stored in the RAM and updated when the jump or switch has been made. An eject switch 226 and its button for control of the motor drivers 208 and 210 initiates the function of reversing the rotations of the motors to eject the carrier until the rack 78 is no longer engaged by the gear 90 and until the rack 104 is no longer engaged by the gear 106.

In accord with preferred embodiments of this invention, the proportion of the scales of three map images is 1:4:16 and the magnification of the optical system is in the order of 25x. It is to be understood that as used herein, and as is believed to be in accord with US convention, the largest map of a composite will have the largest scale so as to display the greatest detail etc., so that if this largest scale is 1:200 000, the above proportions will mean that the next smaller map image of the composite will have a scale of 1:800 000 and the smallest map of the composite will have a scale of 1:3 200 000. The microfiche composite film is preferably Cibachrome Micrographic material which is a diapositive material noted for its high resolution. The exposures on this material may be made from an enlarged aerial photographic master which may measure 9x9 meters, for example, suitable reduced to the requisite sizes in the proportions of 1:4:16 as noted, on the film material to produce the diapositive composite of the map images. In the process, a fixed size text may be included on each map image, the fixed text size being large enough to be read at the fixed magnification. Thus, the small scale map image may contain only text identifying various countries or states in the region denoted on the master, the next larger scale map image may contain only text identifying various cities, towns or villages within the region which can bee readily seen at the fixed magnification from this larger map image, and the largest scale map image may contain only text identifying streets, etc. which can be readily seen on this largest map image at the fixed magnification.

The system is mounted for use in an automobile and may derive its power from a cigarette lighter plug. In order to conserve the automobile batter and to avoid undue heat build-up die to the high intensity nature of the hallogen light source, the microprocessor is programmed to shut down the light source whenever the system has not been used by the operator for a few minutes, say two minutes. Moreover, whenever the system is commanded to switch or jump from one map image to another, the lamp is shut down automatically for a brief period (usually about 2 seconds) while calculations are being performed and the step motors carry out their movement functions. Also, the program is such that manual positioning of the step motors is restricted to a center point boundary within the confines of each map image so that the display will not encroach beyond the borders of the map images or cause a dual or overlapped display as has been noted before. The system is wired to be "on" whenever the auto ignition is on and the microprocessor program is such that if the ignition is turned off, the eject function will occur.

It will be obvious that instead of performing the calculations as specified in general above for the purpose of switching from a display on one map image to the corresponding display on another map image, the ROM may contain tables designating all of the coordinate positions of each map image so that a corresponding position on one map image may immediately be identified by transposing from the table of that one map image to the table of another map image.

Lastly, it should be noted at the present, the step motors execute steps of 0,1 mm which are adequate for the purposes intended.

A rigid support for a microfiche having a rack along one side edge thereof, which is adapted to form part of the map display assembly according to the invention allows the construction of the assembly to be as small as possible. Another advantage is the fact that the rack, being a part which is subject to wear and ageing, is regularly exchanged.

The system according to the invention can be designed such that the data being present in the memory means is under all circumstances safeguarded against undue erasure as a result of switching of the supply in that a rechargeable battery can be used, a small built-in RAM, or the utilisation of two additional microswitches directing the fiche to the x=0, y=0 position at the moment on which the supply voltage is switched in again. Also, after this initial zero-setting the microprocessor may control the x- and y-motors such that the first, preprogrammed map position is displayed.

The fiche may carry additional space on the photographic material. This space may be used for special applications:
- "menu": choice from several different options,
- index : e.g. a list of capitals, main streets, etc., together with the related map-coordinates,
- coordinates-input: designed as to horizontal rows A-Z and 1-30, i.e. a grid measuring 26x30.

The control of such options may take place by means of the x-y-control, i.e. a joystick or other suitable means.

The two additional microswitches mentioned herein before to perform the x=0, y=0 setting may also be utilised for:
- zero-setting at the moment of positioning the carrier or support for the fiche,
- reset function, in case steps are lost, e.g. due to a supply current interruption and the like (resetting to zero and back to the loaded position),
- restoration of the former position after switching of supply voltage in view of energy saving, safeguarding against over-heating and the like,
- enhancing the operation accuracy in case of use of an index, menu or coordinate-system (first go to zero in order to eliminate steps already lost, and then go to the related part of the fiche).

The two microswitches may be engineered as one single optical switch-signalling (LED/photocell). A small part of the fiche (photographic material) is made opaque and a transparant part, such as a cross or the like, is present therein. First the position x=0 is determined and loaded into the memory. Subsequently e.g. 10 steps upward (the chance that the apparatus looses now one or more steps is minimal), after which the y=0 position is searched. Namely: x=0 and y=0 do not necessarily have to be determined simultaneously. Advantages of this solution: use of only one component; optical signalling is very accurate and furthermore: the zero-setting is now directly coupled with the film material, as a result of which in accuraces of the positioning of the film relative to its support is substantially eliminated.

It is, in principal, possible to use one and the same optical signalling in order to detect the positioning or the presence of a fiche, after the supply current has been interrupted. The only error detection if the current is switched of when the light-based positioning system is exactly in the point x=0, y=0, can readily be eliminated by an adaptation of the software, namely the causing of a small movement around this point, as a result of which it can readily be determined in which status the apparatus is. In this case three micro switches are replaced by one optical sensor.

Furthermore it should be noted that positioning a carrier for the microfiche having a side rack, in the apparatus, and removing same therefrom, can very easily take place in the transverse direction of the rack. Thus, the rack and the gear are brought into continuous contact during the presence of the carrier or support in the apparatus.

It will be obvious that the invention allows a great freedom in the choice of the map scales of the different maps, which may be chosen in accordance with the required "generalisation". This term "generalisation" is known from the cartography sciences and refers to the deleting of details or the addition thereof dependent upon the scale factors chosen.

## Claims

1. A map display system which comprises a microfiche representation of spatially separate first (27) and second (28, 29) map images of the same terrain and having different scales so as to be examined individually at fixed magnification to reveal details of corresponding portions of the map images (27, 28, 29) permitted by the individual scales of the two map images and the fixed magnification,
**characterized by**
a substantially rigid support (102, 120) for the microfiche (100) having a rack (104, 122) along one side edge thereof, and
a receptacle (72, 94) defining a slot for receiving the support (102, 120), a motor (82) carried by the receptacle (72, 94) and a driving gear (84) rotated by the motor (82) and engagable with the rack (104, 122) to draw the support (102, 120) into the receptacle (72, 94) along one path (7) and to translate the support back and forth along the one path (7), a housing (50) having guide slots (86, 88) extending along a second path (8) orthogonal to the one path (7), the receptacle (72, 94) having a second rack (78) extending along the second path (8) and guides (80) received in the guide slots (86, 88), the housing (50) including a second motor (52) and a second driving gear (54) rotated by the second motor (52) and engagable with the second rack (78) to draw the receptacle (72, 94) into the housing (50) and to translate the receptacle (72, 94) back and forth along the second path (8).

2. The system according to claim 1, in which the map image (28, 29) of smaller scale is of small size compared with the size of the other map image (27) of larger scale, the system further comprising means for displaying a portion of a selected one of the map images at a fixed magnification, and means for switching the fixed magnification display from the portion of the selected one of the map images to a corresponding portion of the other map image, the means for switching comprising a microprocessor (142, 220) having memory means (144, 146, 215, 212) for storing the coordinate positions of a reference point of the displayed portion of the selected one of the map images and programmed to compute the corresponding reference point coordinates of the corresponding portion of the other map image.

3. The system according to claim 2, **characterized in that** the motor carried by the receptacle (18, 82) and said second motor (17, 52) are responsive to the microprocessor (142, 220) for moving the support orthogonally with respect to the means for displaying to effect switching between fixed magnification displays.

## Patentansprüche

1. Kartenabbildungssystem, das eine Mikrofiche-Darstellung von räumlich getrennten ersten (27) und zweiten (28, 29) Kartenbildern des gleichen Gebiets aufweist, die verschiedene Maßstäbe haben, so daß sie individuell mit einer festen Vergrößerung überprüft werden müssen, um Details von entsprechenden Teilen der Kartenbilder (27, 28, 29) zu erkennen, die durch die individuellen Maßstäbe der beiden Kartenbilder und der festen Vergrößerung erlaubt sind,
**gekennzeichnet durch**
einen im wesentlichen starren Träger (102, 120) für den Mikrofiche (100), der eine Zahnstange (104, 122) längs seinem einen Seitenrand aufweist, und
einen Behälter (72, 94), der einen Schlitz festlegt, um den Träger (102, 120) aufzunehmen, einen durch den Behälter (72, 94) gelagerten Motor und ein Antriebszahnrad (84), das durch den Motor (82) angetrieben wird und in die Zahnstange (104, 122) eingreifen kann, um den Träger (102, 120) in den Behälter (72, 94) entlang einer Bahn (7) zu ziehen und um den Träger nach vorne und zurück entlang der einen Bahn (7) zu befördern, ein Gehäuse (50), das Führungsschlitze (86, 88) aufweist, die sich entlang einer zweiten Bahn (8) orthogonal zu der einen Bahn (7) ausdehnen, wobei der Behälter (72, 94) eine zweite Zahnstange (78), die sich entlang der zweiten Bahn (8) ausdehnt, und Führungen (80) aufweist, die in den Führungsschlitzen (86, 88) aufgenommen sind, wobei das Gehäuse (50) einen zweiten Motor (52) und ein zweites Antriebszahnrad (54) aufweist, das durch den zweiten Motor (52) angetrieben wird und das in die zweite Zahnstange (78) eingreifen kann, um den Behälter (72, 94) in das Gehäuse (50) zu ziehen und um den Behälter (72, 94) nach vorne und zurück entlang der zweiten Bahn (8) zu befördern.

2. System nach Anspruch 1, bei dem das Kartenbild (28, 29) mit einem kleineren Maßstab klein ist verglichen mit der Größe des anderen Kartenbilds (27) mit einem größeren Maßstab, wobei das System weiter Mittel zum Abbilden eines Teils eines der ausgewählten Kartenbilder mit einer festen Vergröβerung und Mittel zum Umschalten der Abbildung mit fester Vergrößerung aus dem Teil des einen ausgewählten der Kartenbilder auf einen entsprechenden Teil des anderen Kartenbilds aufweist, wobei die Umschaltmittel einen Mikroprozessor (142, 220) aufweisen, der eine Speichereinrichtung (144, 146, 215, 212) zum Speichern der Koordinatenpositionen eines Referenzpunktes des abgebildeten Teils des einen ausgewählten aus den Kartenbildern aufweist, und der so programmiert ist, daß er die entsprechenden Referenzpunktkoordinaten des entsprechenden Teils des anderen Kartenbilds berechnet.

3. System nach Anspruch 2, dadurch gekennzeichnet, daß der Motor (18, 82), der durch den Behälter gelagert ist, und der zweite Motor (17, 52) in Abhängigkeit vom Mikroprozessor (142, 220) den Träger orthogonal in bezug auf die Abbildungsmittel bewegen, um ein Umschalten zwischen Abbildungen mit festen Vergrößerungen auszuführen.

## Revendications

1. Système d'affichage de carte comprenant une représentation par microfiche constituée par des première (27) et seconde (28, 29) images de carte du même terrain et présentant des échelles différentes, de manière à être observées individuellement selon un grossissement déterminé, en vue de révéler des détails de parties correspondantes des images de carte (27, 28, 29), obtenus par les échelles spécifiques des deux images de carte et le grossissement déterminé,
caractérisé par :
un support (102, 120) substantiellement rigide, destiné à la microfiche (100) présentant une crémaillère (104, 120) le long d'un bord latéral, et
un réceptacle (72, 94) définissant une fente destinée à loger le support (102, 120), un moteur (82) supporté par le réceptacle (72, 94) et un engrenage d'entraînement (84) entraîné en rotation par le moteur (82) et susceptible d'engrener la crémaillère (104, 122), afin de tirer le support (102, 120) dans le réceptacle (72, 94) le long d'un chemin (7) et de déplacer le support vers l'avant et vers l'arrière le long du chemin (7), un boîtier (50) présentant des fentes de guidage (86, 88) s'étendant le long d'un second chemin (8) perpendiculaire au premier chemin (7), le réceptacle (72, 94) présentant une seconde crémaillère (78) s'étendant le long du second chemin (8) et des guides (80) logés dans les fentes de guidage (86, 88), le boîtier (50) comprenant un second moteur (52) et un second engrenage d'entraînement (54) entraîné en rotation par le second moteur (52) et susceptible d'engrener la seconde crémaillère (78), afin de tirer le réceptacle (72, 94) dans le boîtier (50) et de déplacer le réceptacle (72, 94) vers l'avant et vers l'arrière le long du second chemin (8).

2. Système selon la revendication 1, dans lequel l'image de carte (28, 29) à plus petite échelle présente de plus petites dimensions par rapport aux dimensions de l'autre image de carte (27) à plus grande échelle, le système comprenant en outre des moyens servant à afficher avec un grossissement déterminé une partie d'une image sélectionnée parmi les images de carte, et des moyens servant à commuter l'affichage à grossissement déterminé, de façon à passer de la partie de l'image sélectionnée parmi les images de carte à une partie correspondante de l'autre image de carte, les moyens de commutation comprenant un microprocesseur (142, 220) présentant des moyens de mémorisation (144, 146, 215, 212), servant à stocker des positions de coordonnées d'un point de référence de la partie affichée de l'image sélectionnée parmi les images de carte, et programmés de façon à calculer les coordonnées du point de référence correspondant de la partie correspondante de l'autre image de carte.

3. Système selon la revendication 2, caractérisé en ce que le moteur (18, 82) supporté par le réceptacle et ledit second moteur (17, 52) réagissent au microprocesseur (142, 220), afin de déplacer le support perpendiculairement aux moyens d'affichage, de manière à effectuer une commutation entre les affichages à grossissement déterminé.
